# EUROPEAN PATENT SPECIFICATION

(11) **EP 0 587 830 B1**
(45) Date of publication and mention of the grant of the patent: **06.09.2000**
(21) Application number: 93904483.0
(22) Date of filing: 11.01.1993
(51) Int. Cl.: G01N 30/48, C08B 16/00, C08J 3/16, C08J 5/18, D01F 2/00, C08L 1/02

(54) **CELLULOSE CHROMATOGRAPHIC SUPPORTS AND METHOD**
CHROMATOGRAPHISCHE TRÄGER AUF CELLULOSEBASIS SOWIE ZUGEORDNETES VERFAHREN
SUPPORTS CHROMATOGRAPHIQUES CELLULOSIQUES ET PROCEDE ASSOCIE

(30) Priority: 10.01.1992 US 818925
(43) Date of publication of application: 23.03.1994
(73) Proprietor: ACCURATE POLYMERS, LTD., Park Ridge, IL 60068 (US)
(72) Inventor: SCARPA, Ioannis, Chicago, IL 60660 (US); BEAVINS, Anita, M., Mokena, IL 60448 (US); STIPANOVIC, Bozidar, Lake Forest, IL 60045 (US)
(74) Representative: Fürniss, Peter, Dr.rer.nat.Dipl.Chem
(86) International application number: US9300197
(87) International publication number: WO9313937

(56) References cited:
- WO-A-91/00297
- US-A- 2 004 271
- US-A- 4 551 389
- US-A- 4 663 447
- US-A- 4 902 792
- US-A- 5 064 949
- PATENT ABSTRACTS OF JAPAN vol. 11, no. 47 (C-403) 13 February 1987 & JP-A-61 213 201 (FUJI PAUDARU KK) 22 September 1986

## Description

This invention relates to an improved process for reconstituting cellulose from viscose, and improved uncrosslinked, high density, spheroidal cellulose chromatography support beads without substantial holes or craters on their surfaces. Said fibers, film, and beads being substantially free from open cell structures connected with the outer skin resulting in smooth surfaces. Said beads can be produced in sizes from 300 micrometers down to as small as a fraction of a micrometer. There is no reason to suppose that they may not be made smaller still. Relatively narrow size-distributions can be achieved around a nominal diameter, the nominal or average diameter being controlled primarily by the selection of emulsifying agent and surfactant and by varying other controlling factors such as the selection of water immiscible solvent, order of addition, and rate of mixing.

### BACKGROUND OF THE INVENTION

U.S. Patent 4,946,953 to Okuma and Patent 4,055,510 to Peska et al. provide an understanding of the background of the invention. Both teach the making of swellable, spherical, reconstituted cellulose gel particles.

U.S. Application Ser. No. 07/374,281, filed June 30, 1989 by two of us, Scarpa and Beavins, directly relates to the problems addressed by this application. The substance of that application was published January 10, 1991 with the entry into the National Phase of the corresponding PCT Application No. PCT/US90/03716 Publication No. W091/00297 and is incorporated by reference herein.

Cellulose and cellulose derivatives have been used as chromatographic supports and as filtering media. Chromatographic uses include analytical and preparative column chromatography, thin-layer chromatography, ion exchange and gel chromatography, and chelation and affinity sorbents. Additionally, cellulose particles have numerous other uses in the pharmaceutical, food, and cosmetics industries.

Cellulose is a naturally occurring polymer of linked glucose monomers. In the native state, polymeric glucose chains are extensively hydrogen bonded to each other in some regions and less hydrogen bonded in others. The regions of relatively high hydrogen bonding are generally referred to as "microcrystalline regions", while the less hydrogen bonded regions are referred to as amorphous regions. For classical low-pressure chromatographic applications, it is generally desirable to limit the amorphous regions, and increase the microcrystalline regions.

Procedures typically used to prepare microcrystalline cellulose generally result in aggregated particles which require grinding and particle-size separation, commonly referred to as "classification", to yield materials suitable for chromatographic purposes. Further, the individual microcrystalline cellulose particles are of relatively irregular shape and fragile. These features adversely effect the use of these types of materials as chromatographic beds or columns because microcrystalline cellulose tends to easily clog and compact. In addition, these materials tend to break down and generate fines when subjected to elevated pressure. These drawbacks can result in unacceptable flow characteristics and poor chromatographic separations.

The use of cellulose in the form of crosslinked spheroidal beads, partially overcomes cellulose's poor flow characteristics but has not led to beads of narrow size-distribution which could take medium to high pressures, a prerequisite for high performance chromatographic separations. The "pressure" referred to is the hydraulic pressure applied at the input of a column, packed with the medium which is necessary to maintain a particular flow rate, for a particular size of bead. The presence of broken beads, or under-sized beads, so called "fines" interferes with such tests. The Scarpa/Beavins procedure as disclosed in the above publication on January 10, 1991 of their PCT Application produces spherical, dense beads of varying size distribution which are pressure-resistant to at least 750 psi. Said beads contain unequally distributed holes or channels of varying diameters. Such structural irregularities can lead to loss of resolution when separating enzymes or other macromolecular due to their diffusion in the interior of the beads.

As discussed above, crosslinking enhances the mechanical stability of cellulose beads, but such crosslinking increases the cost of the support, complicates the manufacturing processes, and thereby limits the general utility of use of such a support medium.

Porous uncrosslinked cellulose particles when placed in aqueous solutions typically swell significantly. Swelled, porous cellulose beads suffer from sensitivity to changing ionic strengths in eluting buffers and solvents and do not withstand high pressures. As a result, conventional, swellable cellulose supports must therefore be used within a specified range of ionic strengths. If this specific range of ionic strengths is exceeded, the swollen cellulose particles compact or shrink which results in very poor flow characteristics and leads to either poor chromatographic separations or to no separations at all.

Several methods of preparing spheroidal cellulose particles are known. Japan patents 73'21m738 and 73'60,753 extrudes a viscose at high speed through a nozzle into a spinning acidic coagulating bath. Determan and Wieland in French Patent no. 1,575,419 and U.S. Patent no. 3,597,350 forms a dispersion in an organic solvent with a surfactant and then coagulates the suspension by pouring it into an acid solution. These procedures generate porous cellulose particles of variable and uncontrolled size distribution and suffer from the undesired formation of aggregates, and agglomerates of irregular and deformed shapes. These problems are believed due to adhesion of insufficiently coagulated viscose under changing hydrodynamic conditions. A third procedure, Peska, thermally forms cellulose particles by heating a stirred viscose solution of technical cellulose emulsified with relatively low viscosity, water immiscible liquid. Although this procedure uses a relatively constant, hydrodynamic environment for bead formation, the thermal decomposition of the sodium cellulose xanthate results in porous particles having a wide range of sizes. Scarpa-Beavins application Ser. 07/374,281 discloses a process for the making of substantially spherical, high-density-cellulose particles by the steps of forming a stable emulsion of high-molecular-weight viscose using at least one emulsifying agent and a water immiscible liquid carrier of suitable viscosity at a temperature typically between 20 and 30° C, then chemically regenerating the cellulose slowly with acid while the beads are retained in suspension by stirring. Beads made according to the above method, being solid and microporous with relatively few larger voids and holes, do not swell appreciably when contacting aqueous solutions of varying salt concentration.

When following the teachings of the Scarpa-Beavins pending application, Ser.07/374,281 to produce larger batches (represented by the Examples 1), that is, 50 liter batches and larger, it was found that the time needed for coagulation of beads becomes prohibitively long. In addition, it is evident from electron micrographs that the interior of the beads is sparsely populated with holes and craters, some of which reach 5,000 Å in size. In certain instances, as where ligands are attached, chromatographic separation may be improved if all of the substrate/sorbent interactions take place exclusively on the outside of the surface of the bead. In such cases any holes of a size that may accommodate a substrate molecule will have to be eliminated; otherwise diffusion-based interferences may adversely affect resolution of pure compounds. The present invention significantly shortens the reaction time required for coagulation of the beads as well as eliminates holes and voids in the envelope of the final bead product, accessible to the liquid. Since the filing of the corresponding U.S. Application, we have learned that a modification of the methods disclosed therein results in a new form of cellulose bead, spheroidal in shape, with a smooth, strong skin, which skin is non-swelling and is impervious to nitrogen, and therefore should be substantially impervious to large biomolecular molecules.

Based on the above properties such beads would seem to be ideally suited as carriers of ligands that would be attached exclusively on the outside surfaces, enabling substrate/sorbent interactions to take place exclusively in the bulk of the solution, rather than in the pores, in the interior of the beads. Thereby most of the diffusion phenomena that detrimentally affect separations would be eliminated. In addition, if the ligands where conveniently attached to the outside surface of hole-free solid cellulose via long linear and hydrophylic "tentacles" such as α,w-bifunctional polyethylene glycol molecules of molecular weight of up to 6,000 Daltons, as a result a new, advanced chromatographic sorbent device would be built where most of substrate/sorbant nonspecific interactions, and diffusion phenomena would substantially be eliminated. The attached ligands may be selected from the groups of enzymes, antibodies, peptides, proteins, nucleotides and other affinity ligands. This new structure is perfectly compatible with the attachment of covalently bound ligands to the support beads as disclosed in the above- preferenced Scarpa prior PCT Application published January 10, 1991

### SUMMARY OF THE INVENTION

It is an object of the invention to overcome one or more of the problems listed above. Another object of this invention is to provide new means, general in scope for the reconstitution of cellulose with outer surfaces essentially void-free and being dense, crush resistant to yield novel beads, filaments, fibers, and films.

The invention contemplates five different processes and the products produced thereby:
(A) A method of toning a viscose water-in-oil emulsion by mixing incoming streams of viscose and oil-surfactant solution, respectively, in a high energy mixing device, followed by coagulating surfaces of the viscose droplets by neutralizing the excess of caustic soda by a carbonic acid ester;
(B) A method toning a viscose water-in-oil emulsion as in process A, whereby now the surfaces of the droplets are more quickly hardened when contacted by an excess of an essentially anhydrous alcoholic salt solution;
(C) A method of toning a viscose water-in-oil emulsion by an inversion process, whereby oil/surfactant solution is added in small increments into viscose which is being mixed at a low speed by a planetary mixer (i.e. dough mixer), causing at some point a thick phase (liquid crystalline state) which upon further addition thins out indicating an inversion of oil-in-water state, thereby resulting in viscose water-in-oil emulsion of unit on droplets, surface thereof is subsequently quickly hardened when contacted by an excess of an essentially anhydrous alcoholic salt solution;
(D) To prevent swelling, contacting the coagulated intermediates formed in processes A, B & C with concentrated aqueous and alcoholic salt solutions thereby removing by-products, that may liberate gases upon regeneration with acid, resulting in dense, non-swelling beads without irregular holes or channels on their surfaces; and,
(E) A still further object of the invention is to produce other tons of regenerated cellulose, namely films and filaments, with improved properties resulting from the elimination of voids, making possible, for example, stronger fibers, which can be used for manufacturing improved rubber reinforcing cords. To create void-free cellulose films, fibers, and filaments extruding raw technical viscose into concentrated non-aqueous anhydrous salt solutions, contacting the coagulated intermediate bodies with aqueous and alcohol salt solutions as in (C) and regenerating to cellulose to yield an improved rayon and cellophane. Other objectives and features of the invention will in part be obvious, and in part be apprehended from the following detailed description and the appended FIGURES **of which:**
   FIG. 1 is a schematic diagram of apparatus for the practice of the invention on pilot scale, using a high energy mixing device;
   FIG. 1A. is a schematic diagram of apparatus for the practice of the invention on pilot scale, using an inversion method;
   FIG. 2. is a schematic diagram of apparatus for the practice of the invention as a continuous process;
   FIG. 3. is a schematic diagram of apparatus for the practice of the invention to make improved, stronger rayon fibers; and stronger, less porous, water resistant cellophane film,
   FIG. 4. displays an electronmicrograph of the bead surface at 5000 magnification.
   Fig. 5a displays an electronmicrograph of a bead section at 8000 magnification.
   FIG. 5b displays an electronmicrograph of a bead section at 25000 magnification.

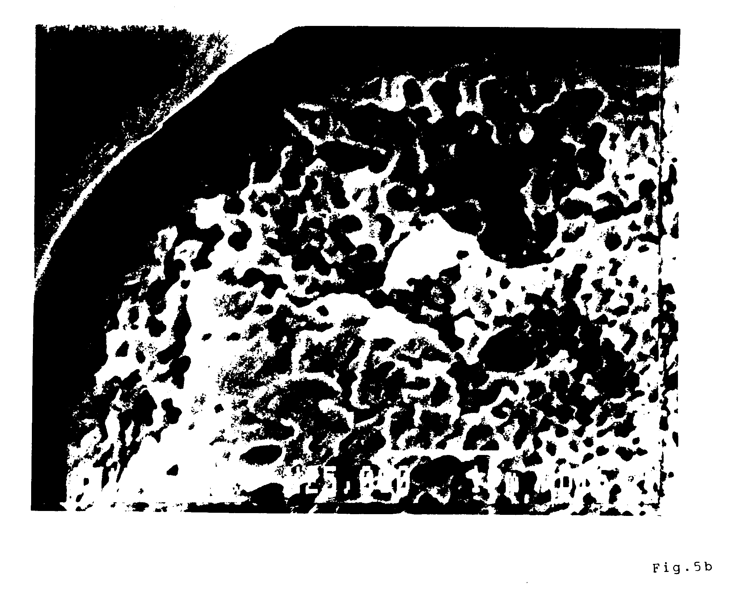

   FIG. 5 is a copy a polarized light-photomicrographs obtained from beads produced in Example 8.

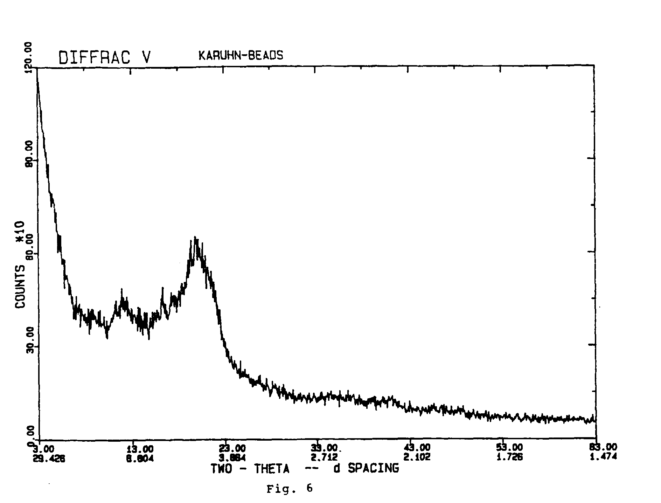

   FIG. 6. is a X-ray diffraction pattern obtained from examining beads produced using Example 9.

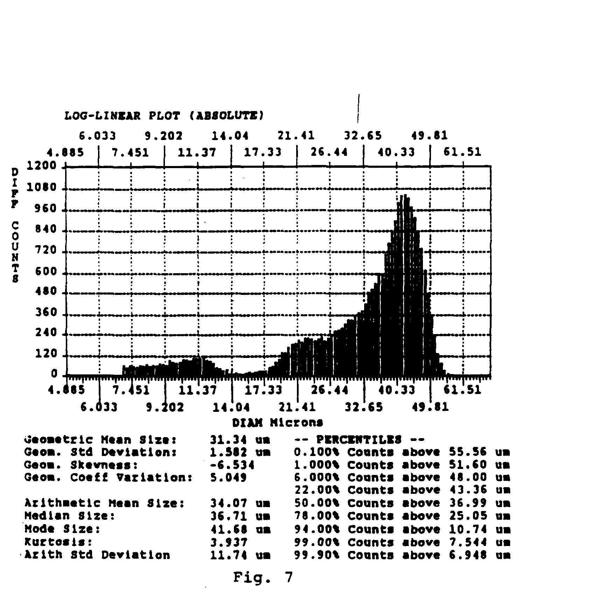

   FIG. 7. is particle size distribution histogram obtained from examining beads produced by Examples 4 and 5.

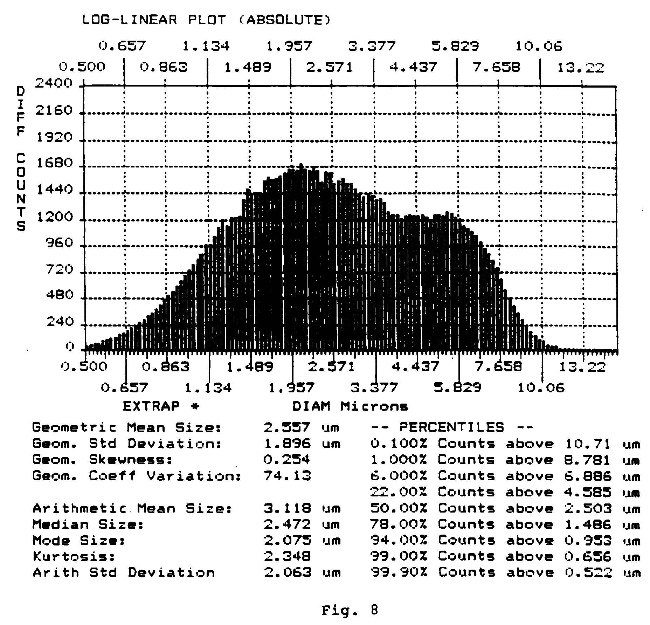

   FIG. 8. is a particle size distribution histogram of beads produced using the process of Example 9.

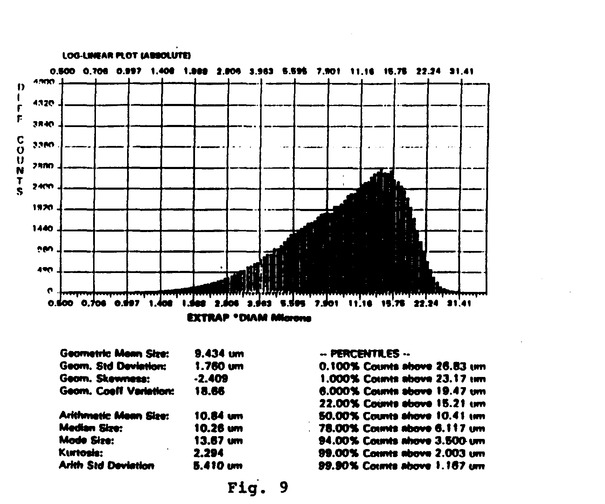

   FIG. 9. is a particle size distribution histogram of beads produced using the process of Example 10.

### DETAILED DESCRIPTION OF THE INVENTION

### Viscose coagulation by buffering of pH.

It might be expected that lowering of pH would destabilize viscose to a point that it would become insoluble when acids are carefully added to a viscose emulsion. In our experiments, however, no matter how carefully acid was added to the emulsion it always resulted in quick formation of a glob by flocculation and fusion of sticky viscose droplets before the surface skin could have been formed. Very weak acids that may lead to gradual buffering of caustic solution like carbon dioxide were also tried and gave some encouraging results. But precise metering of gaseous CO₂ into the emulsion presents a problem. Therefore we have accomplished neutralization by addition of an ester of carbonic acid that hydrolyzes under alkaline conditions and liberates CO₂, thereby neutralizing the excess of caustic soda, NaOH, in the viscose solution, in accordance with the following reaction: 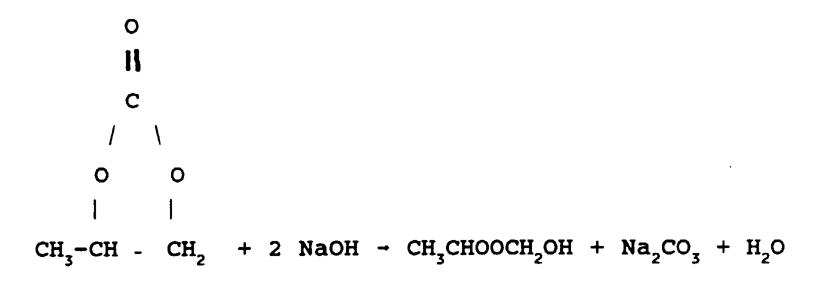 This reaction results in buffered viscose thereby causing insolubility of the cellulose xanthate. For this purpose, from a number of available carbonic acid esters, we have selected a very convenient carbonate ester, propylene carbonate, a commercially available and economically priced solvent. Both propylene carbonate itself and the product of its hydrolysis, propylene glycol, are viscous materials with low flammability and toxicity. Such carbonate esters can be precisely metered in required quantities into emulsions in order to achieve desired effect, i.e. coagulation and hardening of cellulose xanthate at the surface.

This method is a convenient way to cut down the time for production of beads, but it is dependent on the age of viscose (also referred to as ripening). Both green and very ripe viscose, respectively, do not respond to this method very easily, but moderately ripe viscose solutions can result very quickly (in less that one hour) in filterable beads that can subsequently be reconstituted into desirable compact microspherical cellulose beads.

### Emulsion breaking and simultaneous dehydration of viscose

The method according to teachings of the Scarpa-Beavins application calls for an organic fluid as a carrier for formation of a reversed water-in-oil emulsion. For emulsifications and stabilization of such reverse viscose emulsion in an organic, water-immiscible fluid, anionic, cationic and nonionic surfactants, can be used as primary emulsifiers. Also anionic, cationic and nonionic polymers, linear and/or globular can be used as protective colloids in conjunction with said primary emulsifiers or such colloids may sometimes be used as sole emulsifying systems. The carrier fluid has a viscosity sufficiently high in order to keep viscose droplets in suspended form for reasonably long periods of time and until the skin on the outside of the bead is formed. Before filtering of coagulated beads, the viscosity of the emulsion is reduced, usually by addition of a light solvent, such as hexane. If, for whatever reason, some beads are not completely cured and the surface skin of the individual beads is not sufficiently hardened, settled beads adhere to each other, creating agglomerations of coalesced beads. As a remedy, to overcome a lengthy process of coagulation whereby skin is left to form at its own rate, a method was developed to break down and thin the emulsion quickly in order to separate beads, and at the same time form a skin by dehydrating the surface of the droplets, thereby insolubilizing almost instantaneously cellulose xanthate. This is accomplished by breaking the emulsion with a highly concentrated ethanolic salt solution. Among salts that have high solubilities in ethanol, potassium acetate and magnesium chloride were the salts of choice. As a dispersion fluid disclosed in the pending application and the PCT publication, viscous solvents had to be used in order to slow settling of beads until the skins hardened. In this new method, which greatly accelerates skin formation, high viscosity of dispersion fluid is no longer of concern and any of numerous non-polar solvents can be used for emulsification of viscose as long as they are miscible with salt dissolving solvents.

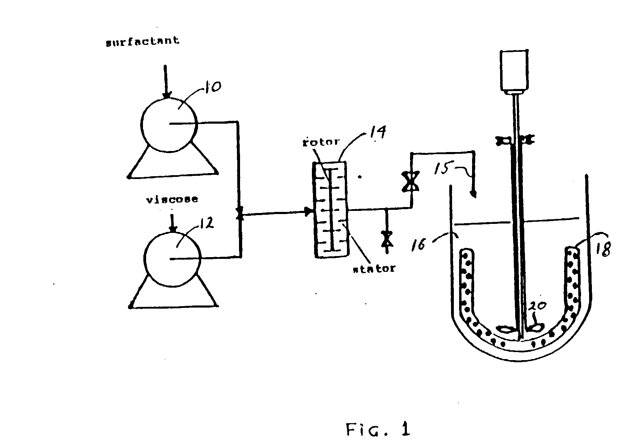

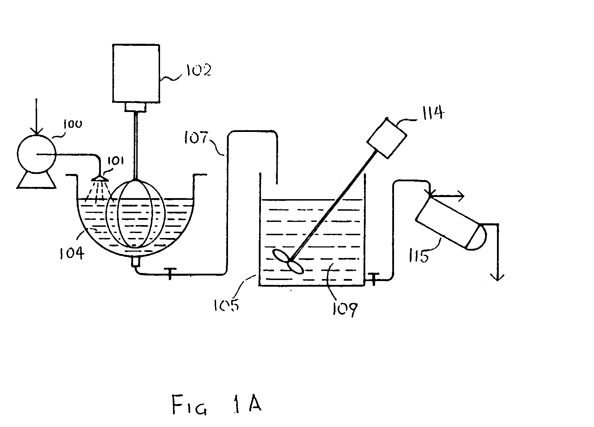

According to FIG. 1, a surfactant mixture from a first pump 10 is fed with viscose by a second pump 12 to a mixer 14, from which the resulting emulsion is discharged to a jacketed tank 16 with two coaxial stirrers, a perforated paddle 18 driven at slow speed, and a propeller 20 driven at high speed. When, as disclosed in the Scarpa-Beavins patent application 07/374,281, coagulation with stirring produces a non-sticky skin on the beads, the contents are then diluted with hexane. After the settling, solvents are decanted, and beads are slurried in ethanol, filtered and washed.

It is important to have a large excess of ethanolic salt solution in order to prevent thickening of the emulsion prior to emulsion breaking. Therefore, an inverse addition of viscose emulsion to the alcohol salt solution was attempted. That proved to be the right method, resulting in a quick separation and precipitation of beads, without agglomeration or thickening. Apparently, on dilution of viscose-in-oil emulsion with a concentrated alcoholic solution of an anhydrous salt, very fast dehydration of cellulose xanthate on the surface of individual droplets takes place, thereby insolubilizing the contacted viscose and effectively forming a hardened surface skin that is no longer sticky. The method appears to be general and independent of the fluid used to prepare the viscose-in-oil emulsion. Also the method is independent of ripeness of the viscose used for emulsion preparation; since breaking the emulsion can now effectively be done immediately after emulsification state, in-line mixers can be used thereby enabling a continuous process for cellulose bead production.

FIG. 1 A. is a schematic diagram of apparatus for making viscose water-in-oil emulsion by an inversion method. Oil-surfactant solution is fed by pump 100by a spray 101 at a controlled rate into a planetary mixer assembly (Hobart®type) 102 which mixes the viscose at low speed. That same speed is maintained when emulsion is going through a thick, liquid crystalline phase. Once the emulsion thins out the lowest mixing speed is maintained while the contents 104 are pumped into the salt-alcohol tank 105. The contents 109 in the 103 are mixed by Lightning® mixer 114. Separation of the beads from the mother liquor is accomplished by using a centrifuge 105.

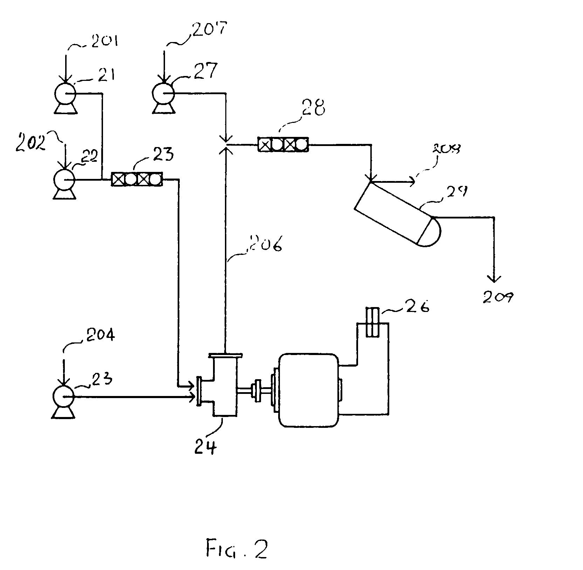

Referring now to Fig. 2, it shows an apparatus for a continuous process of bead production. The emulsifier/surfactant mixture 210 from a first pump 21 is mixed in required proportions with a water immiscible fluid 202from a second pump 22 through a static mixer 23. The resulting mixture is simultaneously fed with viscose 204 from a third pump 23 into an in-line mixer 24 equipped with a speed regulator 26 to control the average size of the beads to be produced. The emulsion 206 produced in this manner is then mixed with alcohol-salt solution 207 from a fourth pump 27 through a static, or other in-line mixer 28. Then contacted with salt-alcohol solution the resulting hardened beads 208 are separated from mother liquor 209 by a continuous centrifuge 29 and are further washed and regenerated.

### Method for preparation of cellulose beads with hole-free surfaces.

Coagulation of viscose results in formation of an insoluble cellulose xanthate. Said xanthate, being a polyelectrolyte, is highly hydrated and swells in water over 200% of its original volume. After regeneration with acid it does not lead to a compact, solid cellulose material. Another problem with regeneration of cellulose from insoluble cellulose xanthate stems from gaseous products, mainly H₂S and CS₂, that are liberated on contact with acid and are responsible for formation of large holes, voids, channels and cracks.

To prevent formation of pores and craters in the hardened bead shell due to liberated gaseous products special methods of washing separated beads have been developed. The first objective is to remove sulfur-based impurities and by-products from the beads by thorough washing, leaving little else but xanthate groups associated with the cellulose. Cellulose xanthate purified in such a manner produces hardly any gaseous products when contacted with acid. The second objective of this washing is to prevent hydration and subsequent swelling of cellulose xanthate. This is done by never contacting said cellulose xanthate with water alone; instead, alcoholic salt solutions of at least 25% concentration and aqueous salt solutions of at least 35% concentration are used for all washings. The use of 25% salt in alcohol removes some sulfur based impurities and severely restricts swelling of the beads, especially when used directly before washing with alcohol alone and followed by regeneration with alcoholic acid solution. Such salts (like potassium acetate) can be made more alkaline by addition of some sodium or potassium hydroxide. Alternatively, aqueous salt solutions of at least 35% salt concentration effectively removes the sulfur-based impurities, while limiting the swelling of beads to an average of no more than approximately 10% of their original volume. After washing sulfur- based impurities and by-products with alcoholic salt and/or aqueous salt solution, beads are washed with alcohol which replaces water and removes excess salt. Finally, since regeneration with aqueous acids also causes swelling (cellulose xanthate hydrates almost instantaneously on contact with dilute aqueous acid solutions), the alcohol-washed beads are then contacted with alcoholic acetic acid (other acids can also be used) thereby regenerating cellulose without swelling. After regeneration of cellulose, beads are then bleached with 6% hydrogen peroxide in a buffered 5% sodium phosphate solution (pH 7) by stirring them at room temperature for 1.5 hours, and thoroughly washing them with water, alcohol and acetone.

The cellulose particles generated through this invention are characterized by the following:
a) They are essentially non crystalline as determined by x-Ray diffractometry;
b) All beads display some degree of orientation as determined by polarizing microscopy;
c) Electron micrograph sections of the beads mounted in epoxy display a structure whereby the cellulose beads show a dense non porous outer shell with an approximate thickens of 1,000 to 2,000 Å and a more porous interior of the closed cell type;
d) The surface area as determined via classical nitrogen techniques known as BET gives a specific area value of 0.8 square meters per gram;
e) The shape of the beads is essentially a spheroid;
f) The preparations of particles where the average diameter is thirty-five microns or below display vary narrow distribution ranges; and
g) The structural features of the cellulose beads provided by this invention are non-swellable and stable in a pH range between 1 and 13.

The diffraction Fig. 6. shows a broad main peak indicating that the crystallite size of the sample measured is extremely small. The sharp diffraction peak (located at about 16.3 degrees two theta d-spacing of 5.4 Å) indicates the presence of another phase in our sample. This diffraction line possibly emanates from the skin of the particles.

The results using polarizing microscopy can be summarized as follows: Crossed bipolar views show that all particles have some orientation. The brightfield images show that many of the larger spheres display inclusions and viserals within. It is difficult to determine at present whether the oriented cellulose molecules occur on skin of the beads in the inside or both.

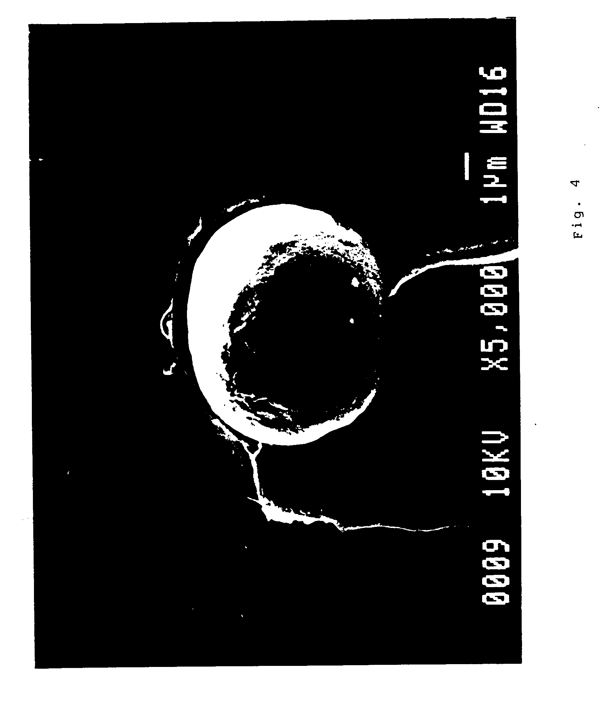

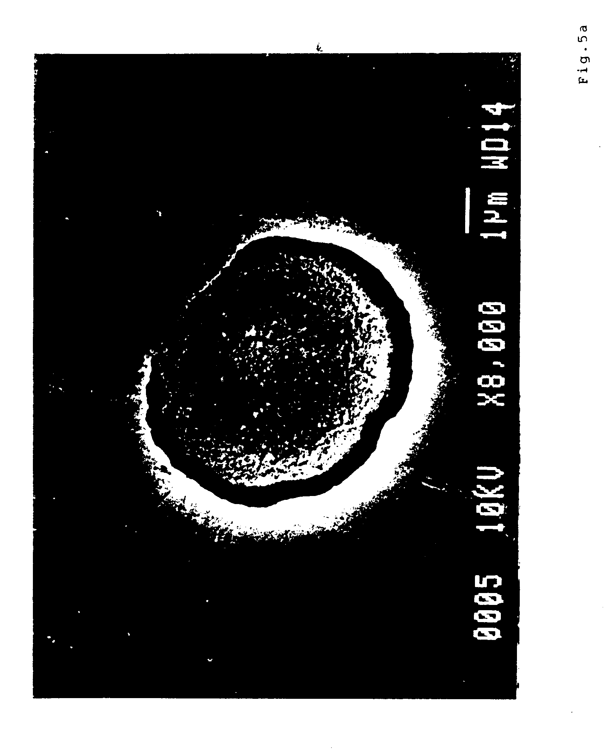

The electromicrographs are consistent with the expectations of the inventors. Fig. 4 demonstrates the smoothness of the surface which is formed rapidly after immersing the emulsion particles in the concentrated alcoholic salt solution. Fig. 5 A. shows the lack of water like holes in the vicinity of 5,000 Å which were evident before developing the new washing and cleaning process. Fig. 5 B. shows the presence of a thick skin of about 1,000 to 2,000 Å on the outside and a more porous single cell type interior.

Surface area was determined via the classical nitrogen adsorption technique known as the B.E.T. method. The very low value of 0.8 square meters per gram is consistent with the dense outer skin character of the cellulose beads which is specifically impervious to nitrogen.

150 mg of cellulose described in examples 4 and 5 of this patent application is suspended in 10 ml of 50% formic acid and stirred under boiling conditions. No visible change occurs to the cellulose beads after boiling for six hours. The experiment was repeated as described above, this time in a pressure vessel which was placed in an oil bath at 140 C overnight heating of the cellulose beads resulted in an approximate 400 percent increase in volume due to swelling.

A volume of 1 ml beads was suspended in a solution of sodium hydroxide at pH 12. The volume expanded to approximately 1.06 mL, and remained constant over a period of 28 days.

A volume of 1 mL well packed beads was suspended in a sodium hydroxide solution at pH 14. Swellilng is discernible after six hours and reaches a maximum volume change of 120 % within four days of standing.

### EXAMPLES

A detailed description of the experiments involved in this invention is given below, preceeded by methods used in measuring the various properties described in the specifications.

### Measurement of molecular order

Photomicrographs are taken in bright field in plane polarized light as well as with crossed polar and a first order red (530 mm) compensator.

### X-Ray measurements

The experiment was conducted on a Siemens D-500 X-ray diffractometer. The diffractometer was configured with medium resolution slits (0.15 degree dector slit) and a diffracted beam monochromator. A copper X-ray tube was used for the experiment and it was operated at 45 kV and 25 mA. The diffractometer is fully computer controlled and was operated in a step scan mode that produced a scanning rate of about 0.5 degrees per minute. The test specimen was rotated (35 rpm) in the X-ray beam.

The test specimen was prepared by applying a thin coating of the sample to a zero background sample holder (essentially a single crystal of quartz cut in a special crystallographic direction). This type of sample preparation procedure generally produces specimens that are nearly randomly oriented, however, the specimen is not infinitely thick to the X-ray beam in the back reflection region of the diffractogram (i.e., high two-theta values).

### B.E.T. measurements

Surface area was determined via the classical nitrogen adsorption technique know as the B.E.T. method. A Micromeritics Flowsorb Model 2300 was used to generate an adsorption isotherm from three precisely blended gas mixtures of nitrogen and helium according to standard methodology. Prior to analysis, the sample was surface conditioned by heating it to 65 degrees C. for one hour. Specific surface area was calculated via standard data mathematics associated with B.E.T. analysis.

### Polarizing Microscopy Measurements

Photomicrographs were obtained with a polarizing microscope. Some photographs were taken in brightfield in plane polorized light. Other photomicrographic were taken with crossed polar and a first order red (530 nm) compensator.

### Measurement of particle size distribution

About 0.1 g of sample is put in a saline solution and measured using an electrozone particle analyzer. According to the Coulter principle this method has a working range of about 0.5 to 400 microns diameter. A typical statistical report is composed of a population base of approximately 250,000 particles over the analytical range with the data being presented on the basis of the equivalent spherical diameter.

### Method for preparation of cellulose, films, filaments, and fibers with hole-free surfaces.

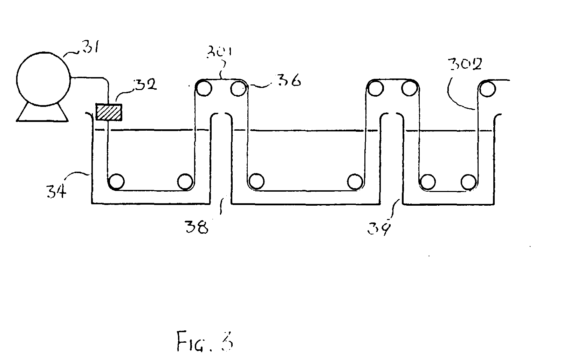

Turning now to FIG. 3, Viscose is pumped by a pump 31 through a restricted orifice 32, either a spinneret, for fiber, or a die for film into a first tank 34 containing an alcohol-salt solution causing the cellulose xanthate to coagulate almost instantly. Coagulated, the film or fiber 301 has sufficient tensile strength to be drawn and guided over rollers 36 into a tank 38 containing an alcohol-salt solution. In that tank the film or fiber is washed thoroughly until the gas- forming impurities are removed. Then the film or filament enters a third tank 39 wherein it is contacted with acid to reconstitute the pure cellulose product, either rayon, or cellophane 302. Only on completion of reconstitution may the film or fiber enter another tank for further washing with water, and air drying. The rotation of the rollers 36 may be controlled as required for the strength and dimensions required.

### Example 1

A mixture consisting of 80 liters of polypropylene glycol (MW 1200), 3,610 grams of ethoxylated castor oil with 5 moles of EO [ethylene oxide], 390 grams of ethoxylated sorbitan monooleate with 20 moles of EO was prepared, mixed well until homogeneous and cooled down to below 10 degrees C. Approximately 30 liters of somewhat green viscose maintained at 6 to 8 degrees C was premixed in approximately 2:1 ratio (volume of PPG surfactant vs. viscose) through an in-line mixer (commercial Oakes® mixer, Mod. #4MB3A), running at 1,700 Rpm. Outgoing emulsion was placed into a 150 liter jacketed tank under efficient and continuous mixing. (See Fig. 1) The emulsion was mixed and maintained at room temperature for about 55 hours. To test if reaction was over, to a small aliquot (1 to 2ml) of the reaction mixture equal volume of hexane was added and mixed on a vortex mixer. After decanting, 1 to 2 mL(milliliters) of ethanol was added and vortexed again. After beads settled down they were easily redispersed on mixing, indicating that viscose had coagulated and a non-sticky skin on individual droplets has been formed. The reaction mixture was thenthinned down with 40 liters of hexane, and left over night to settle. The solvents were decanted, beads were slurried with 20 liters of ethanol, filtered on sintered glass Buchner funnel and washed with hexane, followed by washing with ethanol. A portion of the beads was regenerated by stirring beads overnight at room temperature with 20% acetic acid in ethanol. Gas evolution and foaming were noticeable when acid-alcohol solution was added to beads. After filtering and washing with ethanol the beads were soaked in large volume of water for 24 hours, filtered and thoroughly washed with large amounts of water. Air-dried beads appear under electron microscope to be of solid, compact, material, but some cavities, channels and cracks were also observed.

### Example 2

In a 2-liter beaker equipped with an air-driven mixer were placed 814 grams of polypropylene glycol (MW 1200), 38.8 grams of ethoxylated castor oil with 5 moles of EO, and 4.3 grams of ethoxylated sorbitan monooleate with 20 moles of EO. While stirring, 220 grams of viscose of medium ripeness were added, the reaction was continued for 11 to 12 hours. Then 17 grams of propylene carbonate were added in the course of 2 to 3 minutes. The mixing was continued for another 5 minutes and then the reaction mixture was thinned down with ethanol to about twice the original volume. The beads were left to settle, solvents were decanted and beads were filtered off and washed thoroughly with ethanol. Beads were placed with stirring into 1 liter of 20% acetic acid solution in ethanol (foaming was noticeable), and left for 6 hours. After filtering, beads were washed first with ethanol, then washed several times with water. Air-dried beads appeared to be spheroidal, solid particles with a somewhat rough-looking surface.

### Example 3

A polypropylene glycol-surfactant mixture consisting of 108 Liters of polypropylene glycol (MW 1200), 4,875 grams of ethoxylate castor oil with 5 moles of EO and 525 grams of ethoxylated sorbitan monooleate with 20 moles of EO, was prepared and cooled down to 8° C. Said solution was concomitantly pumped with rather green viscose (cooled down to 10-12° C) in the ratio of 2:1 by volume, respectively, through the Oakes® mixer (as described in Example 1), run at 2500 rpm. The emulsion was fed into a 150 liter tank with two concentric-shaft mixers (see Fig.1). The 45 cm perforated mixing blade was run at 82-83 rpm and 16 cm propeller blade was kept at 450 rpm. A total of 87 liters of emulsion were pumped into the tank. After 48 hours of mixing at room temperature 1,450 grams of propylene carbonate were added in the course of 5 minutes and left with stirring for additional 1/2 hour. About 35 liters of ethanol were added to the slurry with stirring and then the mixture was left to settle. A very reddish-colored supernatant liquid with strong odor of hydrogen sulfide and carbon disulfide was decanted and beads were filtered off. After several washings with ethanol the beads still retained yellowish-brown color. Final washing and cellulose regeneration process is described in Example 5.

### Example 4

A pre-cooled mixture of 108 liters of polypropylene glycol (MW1200), 4,875 grams of ethoxylated castor oil with 5 moles of EO and 525 grams of ethoxylated sorbitan monooleate with 20 moles of EO, was concomitantly pumped with about 35 Liters of cool, ripened viscose through the in-line mixer such as a commercial Oakes® mixer (described in Example 1), run at 2,500 Rpm. Volume ratio of PPG-surfactant vs. viscose was 2:1, and the out-coming emulsion had temperature maintained at 26-27 degrees C. The emulsion was fed into a 150 Liter tank provided with efficient mixing as described in Example 3. A total of about 90 Liters were introduced into the tank. The mixture was stirred at the same rate as described in the preceding example for an hour and then, contents were transferred into a holding tank under continuous agitation. About 35-40 liters of saturated potassium acetate solution in ethanol (approximately 30% concentration) were placed into the 150 liter tank with two coaxial mixers. The viscose emulsion from the holding tank was slowly pumped back into the salt-ethanol solution under vigorous stirring in the course of about 10 minutes, then 25 liters of ethanol were added with stirring and mixture was left to settle down. Small aliquots were filtered, washed with ethanol and acetone, resulting in fine, uniform beaded product that was easily filterable. Total contents were centrifuged on a continuous centrifuge at a rate of 1 to 1 & 1/2 liters per minute. The resulting solids were dispersed in ethanol and centrifuged again. The beads were quite dry and of a very fine particle size. Final washing and cellulose regeneration was done as described in Example 5.

### Example 5;

Portions of the beads from Examples 4 and 5, respectively, were treated in the same manner. The beads were washed first with alcohol until the filtrate was only slightly colored yellow. After the beads were dried on filter or obtained as solids on centrifuging, they were soaked in a large excess of 25 to 30% aqueous potassium acetate solution overnight with stirring. After filtering, the beads were continued to be washed with fresh, large amounts of said salt solution until no more color was coming out. Finally, the residual salt was washed out with alcohol. Beads were then transferred into an excess of 20% acetic acid solution in alcohol. Virtually no gassing from beads was evident on contact with acid. The beads were stirred in said acid-alcohol solution for at least 6 hours, then filtered and washed with alcohol. When these beads were placed into deionized water, no swelling was observed. When water was used as a final wash for beads on a Buchner filter some increase of the volume of the beads on the filter bed was observed, but increase in volume was estimated to be no more than 10%. Dried beads appeared under electron microscope as solid, void free material.

### Example 6

Experiment was carried out in the same manner as example 5. After the beads are dried on filter or obtained as solids on centrifuging, they were soaked in a saturated solution of potassium acetate in ethanol overnight with stirring. After filtering the beads they were again washed with said salt solution in ethanol until no more color was coming out. Finally, residual salt from salt in ethanol solution was washed out with ethanol alone, and the beads were then stirred in a 20% acetic acid in ethanol solution for at least 6 hours, then filtered and washed with alcohol. When these beads were placed into deionized water no swelling was observed. Dried beads appeared under electron microscope as solid, void free material.

### Example 7.

Polypropylene glycol, MW 1200, 150 mL, was mixed with emulsifier, 5 mL, with said emulsifier consisting of 9.7255% of ethoxylated sorbitan monoolate with 20 moles of EO and 90.2745% of ethoxylated castor oil with 5 moles of EO. This was then emulsified with viscose, 75 mL, for 6 minutes on speed #7 of a Waring® blender and resulting mixture was added in total to 30 mL of saturated potassium acetate in ethanol which was stirring during and after this addition on a magnetic stirrer. The resulting product was a fine precipitate; after several washings with 25% K-acetate (potassium acetate) in ethanol and finally with ethanol alone, followed by soaking in 25% acetic acid in ethanol resulted in beads (5.25g) ranging in size from 1-10 microns, which were spherical, dense, and showed no swelling upon contact with water.

### Example 8.

Toluene, 100 mL, was mixed with emulsifier, 5mL, with said emulsifier consisting of 9.7255% of ethoxylated sorbitan monoolate with 20 moles of EO and 90.2745% of ethoxylated castor oil with 5 moles of EO; this toluene-surfactant solution was emulsified with 50 mL viscose using a Waring® blender on speed #5 for 3 minutes. After blending was complete, this was added at once to a constantly stirring solution of 80 mL of a saturated potassium acetate solution in ethanol. This was then washed with 25% K-acetate in ethanol and finally with ethanol alone, followed by soaking for 1 hour in 25% acetic acid in ethanol, washing again with ethanol with this particular emulsifying system the resulting cellulose beads are of 150-500 microns in size; 3.5 g.

### Example 9

Three gallons of commercial viscose (technical viscose) is placed in a steel container of a planetary Hobart® mixer. The mixer is now turned on at speed setting 2 and 77 lbs of an emulsifying solution is added in spray form in 40 minutes to the viscose solution. The emulsifying solution consists of 65.1 lbs. of polypropylene glycol 1200 and d-limonene 30:70, w/w to which 10.9 lbs Igepal DM 730 # has been added. The first three gallons of the emulsifying mixture is added at speed two in 16.8 minutes. On the 21st minute the Hobart® mixer is switched to speed one for the duration of the experiment. Stirring is continued for 10 minutes at speed setting 1 after all the emulsifying mixture has been added. At this point the viscose emulsion is added in a fine stream to 250 lbs of 25% potassium acetate/ethyl alcohol mixture and stirred vigorously by means of a Lightning® mixer. After 16 hours, mixing is discontinued and the cellulose beads are allowed to settle. The supernatant is decanted and the cellulose beads are worked up in the following way. Solvent is removed in a basket centrifuge. The beads are removed from the centrifuge and suspended in ethyl alcohol stirred for 10 minutes. The alcohol is removed through centrifugation. The beads are now suspended in a 35%, w/w, potassium acetate water solution and are stirred for ten minutes. After centrifugation the process is repeated. The cellulose beads at this stage are almost white. They are now washed with ethyl alcohol and after centrifugation stirred in a 20% , v/v, acetic acid ethyl alcohol solution for at least five hours. The beads are now centrifuged and washed with ethyl alcohol to remove excess of acetic acid. They are washed with water to remove all the alcohol and the wet beads are placed in a 5% sodium phosphate solution containing 6% of hydrogen peroxide at pH 7. The beads are stirred for one hour, the supernatant is centrifuged off and beads are washed with water to remove traces of hydrogen peroxide and salts. After drying the beads are ready for further modification.

### Example 10

Three gallons of commercial viscose is placed in steel container of a Hobart® mixer. The mixer is turned on at speed setting 2 and 67.68 lbs of emulsifying solution are added in a spray form in 58 minutes, to the viscose solution. The emulsifying solution consists of 56.78 lbs. of polypropylene gylcol 1,200 and d-limonene 30:70, w/w, to which 10.9 lbs, of Igepal DM 730 # were added. The first 3 gallon are added in 30 minutes. On the 35th minute the Hobart® mixer is switched to a speed setting of one for the remainder of the experiment. From this moment on, the cellulose beads are work up as described in experiment I.

### Example 11

Seventy-five grams of 10% surfactant (52.37% of Igepal DM 730/47.63% Igepal DM 530) in 30/70 w.w. polypropylene glycol 1200/ D-limonene mixture were incrementally added to 37.5 grams of viscose mixed continuously with a hand-held egg beater which was plugged into a variable voltage transformer and maintained at approximately 60 volts. At that voltage the egg-beater was used at lowest speed setting. After 73 grams of above 10% surfactant solution mixture was added, the mixture was still not inverted. To remaining 2 grams of 10% surfactant solution mixture were added additional 0.75 grams of mixture containing 52.37% and 47.63% of Igepal DM 730 and DM 530, respectively. Upon the addition of these 2.75 grams of surfactant solution, the emulsion quickly thinned out and formed a fluid emulsion. The resulting emulsion was added into 230 ml of 25% potassium acetate in ethanol solution with magnetic stirring. After approximately 1/2 hours the suspension was filtered, washed with 25% alcoholic potassium accetate, then alcohol, followed with 35% aqueous potassium acetate, then alcohol and finally reacted with 20% alcoholic acetic acid solution for five hours. After filtering and washing with alcohol, water, alcohol and acetone, beads were observed under the microscope. The average diameter of the resulting beads was estimated to be 20-25 micrometers.

**TABLE I The following table gives examples of, but is not limited to, a wide variety of choices described in this invention regarding metal salts soluble in alcohols, solvents for salts used in breaking the emulsion, alcohols which may be used other than ethanol, solvents for viscose emulsification and the use of various carbonates as sources** **of acids.**

### METAL SALTS SOLUBLE IN ETHANOL AND/OR METHANOL

From the foregoing examples, and from the cited literature, it will be apparent that there is a wide choice of salts for the processes described. The following is a list of operable salts:
1. Chlorides of: Mg++, Ca++, Mn++, Fe++, and Zn++
2. Bromides of: Li+, Mg++, Ca++, Mn++, Fe++, and Zn++
3. Iodides of: Li+, Mg++, Ca++, Mn++, Fe++, and Zn++
4. Nitrates of: Li+, Ca++, Mn++, and Zn++
5. Thiocyanates of: Li+, Na+, K+, Ca++, Fe++, and Zn++
6. Formates of: Na+, and K+,
7. Acetates of: Li+, K+, Mg++, Mn++, Fe++, and Zn++,
8. Propionates of: Na+, and K++,
9. Lactates of: Na+, Mn++, and Zn++, and
10. Salicylates of: Li+, Na+, and Ca++.

### SOLVENTS FOR SALTS AND THE BREAKING OF EMULSIONS

Protic and aprotic polar solvents, glycols, and alcohols, in particular.

### ALCOHOLS OTHER THAN ETHANOL

Methanol, propanol and isopropanol. Glycols such as ethylene and propylene glycols. Lower alcohols satisfy both requirements, breaking up and thinning of the emulsions and high solvency for the salt.

### SOLVENTS FOR VISCOSE EMULSIFICATION

Polypropylene glycol, polybutylene glycol, polytetrahydro furane, and their block co-polymers with polyetylene glycol, glycol ethers, aliphatic, naphthenic. (alicyclic), and aromatic hydrocarbons.

### CARBONATES

Ethylene carbonate, propylene carbonate, dimethylcarbonate, and diethyl carbonate.

The preferred embodiment of this invention is as a chromatographic support.

## Claims

1. A chromatographic support comprising spheroidal, high-density, hard, rigid, cellulose particles, having an average diameter of less than 25 micrometers and a dense non-porous outer shell without holes, cracks or voids discernible in the surface thereof at the magnification of 6000 by electron microscopy, being essentially non-crystalline as determined by x-ray diffractometry, and wherein said particles are, essentially nonswelling in aqueous or organic solutions.

2. A liquid chromatography support comprising: spheroidal cellulose particles
i) less than 25 microns in average diameter,
ii) essentially non-crystalline in structure as determined by x-ray diffractometry,
iii) having a dense non-porous outer shell with a degree of order in its molecular arrangement, as shown by optical activity under illumination by polarized light, and
iv) substantially impervious to nitrogen as determined by the BET surface adsorption test for porosity, resistant to hydrostatic pressure applied by the mercury method in excess of 10,000 p.s.i..

3. The cellulose particles according to claim 2 where substantially all of the ligands-substrate interactions take place outside of said surface.

4. Cellulose particles according to claim 1, having a surface skin of cellulose with a degree of order formed over a spheroidal, core of naturally conforming cellulose.

5. The cellulose particles according to claim 4 further comprising chromatographic ligands covalently bound to said surface.

6. The cellulose particles according to claim 5 where substantially all of the ligands-substrate interactions take place outside of said surface.

7. A method of making spheroidal, dense, small, cellulose particles having a dense non-porous outer shell and being essentially non-crystalline as determined by x-ray diffractometry, particles comprising the steps of :
at temperatures less than 30 degrees C, forming an emulsion of viscose in the presence of at least one emulsifying agent and a liquid carrier, wherein said liquid carrier is an organic solvent immiscible with water, to produce small spheres of viscose, adding to said emulsion sufficient quantity of a carbonic acid ester to cause buffering of high alkalinity of viscose and consequently accelerating the process of formation of hard, non-sticky skin on the surface of the beads.

8. A method of claim 7 wherein an emulsifying agent from the group consisting of anionic, cationic and nonionic surfactants is used as a primary emulsifier, in further combination with linear and/or globular anionic, cationic and nonionic polymers used as protective colloids for said emulsion.

9. A method of claim 7, wherein said carbonic acid ester is selected from the group consisting of: dimethyl carbonate, diethylcarbonate, ethylene carbonate, and propylene carbonate.

10. The method of Claim 7 wherein said ester is propylene carbonate.

11. A method to make spherical, dense, small cellulose particles having a dense non-porous outer shell and being essentially non-crystalline as determined by x-ray diffractometry, comprising the steps of: at temperature less than 30 degrees C forming an emulsion of viscose in the presence of at least one emulsifying agent and a liquid carrier, wherein said carrier is an organic solvent immiscible with water, to produce small spheres of viscose, contacting said emulsion with excess of a dehydrating solution of a salt in a hydrophilic organic solvent miscible with said carrier solvent, causing thereby substantially instantaneous formation of a hard non-sticky skin on the surface of the beads.

12. A method of Claim 11 wherein said one emulsifying agent is selected from the group of compounds consisting of anionic, cationic, and nonionic surf actants as primary emulsifiers, in further combination with a protective colloid for said agent from the group consisting of linear anionic, cationic and nonionic polymers, and globular anionic, cationic and nonionic polymers.

13. A method as defined by Claim 11 wherein said dehydrating salt solution consists of hydrophilic solvents of the group consisting of alcohols, glycols, esters and ethers of alcohols and glycols.

14. The method of claim 13 wherein said solution comprises a lower alcohol.

15. A method of claim 11 wherein said dehydrating salt Solution consists of concentrated solutions of the group of salts consisting of chlorides of Mg and Ca, bromides of Li, Mg, and Ca, iodides of Li, Mg, and Ca, nitrates of Li, and Ca, thiocyanates of Li, Na, K, and Ca, formates of Na, and K, acetates of Li, K, and Mg, propionates of Na and K, lactate of Na, and salicylates of Li, Na, and Ca.

16. The method of claim 11, wherein said salt is potassium acetate.

17. A method of making objects of reconstituted cellulose material that are dense, microporous, non-swellable, essentially non-crystalline as determined by x-ray diffractometry, have a dense non-porous outer shell, and that contain no holes or other voids that are discernable by electron microscopy up to magnification of 6,000 x; said method comprising the steps of: forming a mass of viscose in the shape of said objects, washing and leaching impurities out of the formed mass, contacting said mass with concentrated salt solutions of at least 25% concentration of a salt of the group consisting of chlorides of Mg, and Ca, bromides of Li, Mg, and Ca; iodides of Li, Mg, and Ca, nitrates of Li, and Ca, thiocynates of Li, Na, K, and Ca, formates of Na, and K, acetates of Li, K, and Mg, propionates of Na and K, lactate of Na, and salicylates of Li, Na, and Ca, in any of the hydrophilic solvents of the group consisting of alcohols, glycols, esters and ethers of alcohols and glycols, to form said objects.

18. The method of claim 17 with the further steps of washing said objects with concentrated aqueous solutions of said salts of at least 25% concentration, thereby leaching out impurities that might otherwise cause gassing and foaming on subsequent contact with acids, and regenerating cellulose with acidified solutions of hydrophilic solvents of said group , and comprising acids of the group consisting of organic carboxylic, organic sulfonic and inorganic acids.

19. The method of Claim 18 wherein said carboxylic acids are of the group consisting of acetic, proprionic, formic, oxalic, and lactic acids, and said sulfonic acids are of the group consisting of methane sulfonic acid, benzene, toluene, and xylene sulfonic acids, and said inorganic acids are of the group consisting of hydrochloric, hydrobromic, and nitric acids.

20. The method of Claim 19, wherein said acid is hydrochloric acid.

21. The method of Claim 19, wherein said acid is acetic acid.

22. A method of forming a thin body of reconstituted cellulose comprising the steps of: forming mass of viscose in the shape of said body, contacting said mass with a dehydrating salt solution as defined in claims 11 to 16, washing said thin body according to claim 17 and reconstituting cellulose according to claims 18 to 21.

23. The method of Claim 22, wherein said body is a rayon filament.

24. The method of Claim 22, wherein said body is a film of cellophane.

25. The method of Claim 22, wherein said solution comprises a lower alcohol.

26. The method of Claim 22 wherein said solution comprises magnesium chloride.

27. A liquid chromatography support as defined by Claim 2, wherein said particles are essentially nonswelling in aqueous or organic chromatographic solutions.

28. A liquid chromatography support as defiined by claim 3, wherein said ligands are attached by long, linear and hydrophylic linkages.

29. A support as defined by Claim 28 wherein said linkages are alpha, omega - bifunctional polyethelene glycol molecules with molecular weight between 100 and 6,000 Daltons.

## Patentansprüche

1. Ein Chromatographieträgermaterial, welches kugelförmige, hochdichte, harte, steife, Celluloseteilchen umfaßt, die einen durchschnittlichen Durchmesser von weniger als 25 Mikrometern und eine dichte nichtporöse äußere Hülle aufweisen, ohne daß Löcher, Risse oder Hohlräume in ihrer Oberfläche bei einer Vergrößerung von 6000 durch Elektronenmikroskopie erkennbar wären, die im wesentlichen nicht-kristallin sind, wie durch Röntgenstrahlenbeugungsmessung bestimmt wurde, und wobei die Teilchen in wäßrigen oder organischen Lösungen im wesentlichen nicht quellen.

2. Ein Flüssigchromatographie-Trägermaterial, umfassend:
kugelförmige Celluloseteilchen, die
i) weniger als 25 Mikrometer im durchschnittlichen Durchmesser aufweisen,
ii) in der Struktur im wesentlichen nicht-kristallin sind, wie durch Röntgenstrahlenbeugungsmessung bestimmt wurde,
iii) eine dichte nicht-poröse äußere Hülle mit einem Grad an Ordnung in ihrer molekularen Anordnung aufweisen, wie durch die optische Aktivität bei Beleuchtung mit polarisiertem Licht gezeigt wurde, und
iv) im wesentlichen für Stickstoff undurchlässig sind, wie durch den BET-Oberflächenadsorptionstest auf Porosität bestimmt wurde, und beständig gegenüber einem hydrostatischen Druck sind, der durch die Quecksilbermethode oberhalb von 10.000 p.s.i. angelegt wurde.

3. Die Celluloseteilchen gemäß Anspruch 2, wobei im wesentlichen alle Liganden-Substrat-Wechselwirkungen außerhalb der Oberfläche stattfinden.

4. Celluloseteilchen gemäß Anspruch 1, welche eine Oberflächenhaut aus Cellulose mit einem Grad an Ordnung aufweisen, die über einem kugelförmigen Kern aus Cellulose in natürlicherer Konformation gebildet ist.

5. Die Celluloseteilchen gemäß Anspruch 4, welche weiterhin chromatographische Liganden umfassen, die kovalent an die Oberfläche gebunden sind.

6. Die Celluloseteilchen gemäß Anspruch 5, wobei im wesentlichen alle Liganden-Substrat-Wechselwirkungen außerhalb der Oberfläche stattfinden.

7. Ein Verfahren zur Herstellung von kugelförmigen, dichten, kleinen Celluloseteilchen mit einer dichten nicht-porösen äußeren Hülle und die im wesentlichen nicht-kristallin vorliegen, wie durch Röntgenstrahlenbeugungsmessung bestimmt wurde, welches die folgenden Schritte umfaßt:
bei einer Temperatur von weniger als 30 Grad C: Bilden einer Emulsion von Viskose in Gegenwart von wenigstens einem emulgierenden Mittel und einem flüssigen Träger, wobei der flüssige Träger ein organisches Lösungsmittel ist, das mit Wasser nicht mischbar ist, um kleine Viskosekügelchen herzustellen, Zugeben zu der Emulsion einer ausreichenden Menge eines Kohlensäureesters, um ein Abpuffern der hohen Alkalinität der Viskose zu bewirken und als Folge den Vorgang der Bildung einer harten, nicht-klebrigen Haut auf der Oberfläche der Kügelchen zu beschleunigen.

8. Ein Verfahren nach Anspruch 7, worin ein emulgierendes Mittel aus der Gruppe bestehend aus anionischen, kationischen und nicht-ionischen oberflächenaktiven Stoffen als ein primärer Emulgator in weiterer Kombination mit linearen und/oder globulären anionischen, kationischen und nicht-ionischen Polymeren, die als Schutzkolloide für die Emulsion verwendet werden, verwendet wird.

9. Ein Verfahren nach Anspruch 7, worin der Kohlensäureester ausgewählt wird aus der Gruppe bestehend aus: Dimethylcarbonat, Diethylcarbonat, Ethylencarbonat und Propylencarbonat.

10. Das Verfahren nach Anspruch 7, worin der Ester Propylencarbonat ist.

11. Ein Verfahren, um kugelförmige, dichte, kleine Celluloseteilchen mit einer dichten nicht-porösen äußeren Hülle und die im wesentlichen nicht-kristallin vorliegen, wie durch Röntgenstrahlenbeugungsmessung bestimmt wurde, herzustellen, welches die folgenden Schritte umfaßt: bei einer Temperatur von weniger als 30 Grad C: Bilden einer Emulsion von Viskose in Gegenwart von wenigstens einem emulgierenden Mittel und einem flüssigen Träger, wobei der Träger ein organisches Lösungsmittel ist, das mit Wasser nicht mischbar ist, um kleine Viskosekügelchen herzustellen, In-Kontakt-Bringen der Emulsion mit einem Überschuß einer dehydratisierenden Lösung eines Salzes in einem hydrophilen organischen Lösungsmittel, das mit dem Trägerlösungsmittel mischbar ist, und ein Bewirken dadurch einer im wesentlichen unmittelbaren Bildung einer harten nicht-klebrigen Haut auf der Oberfläche der Kügelchen.

12. Ein Verfahren nach Anspruch 11, worin das eine emulgierende Mittel ausgewählt wird aus der Gruppe an Verbindungen bestehend aus anionischen, kationischen und nicht-ionischen oberflächenaktiven Stoffen als primären Emulgatoren, in weiterer Kombination mit einem Schutzkolloid für das Mittel aus der Gruppe bestehend aus linearen anionischen, kationischen und nicht-ionischen Polymeren und globulären anionischen, kationischen und nicht-ionischen Polymeren.

13. Ein Verfahren wie in Anspruch 11 definiert, worin die dehydratisierende Salzlösung aus hydrophilen Lösungsmitteln aus der Gruppe bestehend aus Alkoholen, Glycolen, Estern und Ethern von Alkoholen und Glycolen besteht.

14. Das Verfahren nach Anspruch 13, worin die Lösung einen niederen Alkohol umfaßt.

15. Ein Verfahren nach Anspruch 11, worin die dehydratisierende Salzlösung aus konzentrierten Lösungen der Gruppe an Salzen besteht, die aus Chloriden von Mg und Ca, Bromiden von Li, Mg und Ca, Iodiden von Li, Mg und Ca, Nitraten von Li und Ca, Thiocyanaten von Li, Na, K und Ca, Formiaten von Na und K, Acetaten von Li, K und Mg, Propionaten von Na und K, Lactaten von Na und Salicylaten von Li, Na und Ca besteht.

16. Das Verfahren nach Anspruch 11, worin das Salz Kaliumacetat ist.

17. Ein Verfahren zur Herstellung von Objekten aus rekonstituiertem Cellulosematerial, die dicht, mikroporös, nicht quellbar, im wesentlichen nicht-kristallin sind, wie durch Röntgenstrahlenbeugungsmessung bestimmt wurde, eine dichte nicht-poröse äußere Hülle aufweisen und die keine Löcher oder andere Hohlräume enthalten, die durch Elektronenmikroskopie bis zu einer Vergrößerung von 6.000-fach erkennbar sind, wobei das Verfahren die folgenden Schritte umfaßt: Bilden einer Masse von Viskose in Form der Objekte, Waschen und Herauslösen von Verunreinigungen aus der gebildeten Masse, In-Kontakt-Bringen der Masse mit konzentrierten Salzlösungen mit einer Konzentration von wenigstens 25% eines Salzes aus der Gruppe bestehend aus Chloriden von Mg und Ca, Bromiden von Li, Mg und Ca, Iodiden von Li, Mg und Ca, Nitraten von Li und Ca, Thiocyanaten von Li, Na, K und Ca, Formiaten von Na und K, Acetaten von Li, K und Mg, Propionaten von Na und K, Lactaten von Na und Salicylaten von Li, Na und Ca in irgendeinem der hydrophilen Lösungsmittel aus der Gruppe bestehend aus Alkoholen, Glycolen, Estern und Ethern von Alkoholen und Glycolen, um die Objekte zu bilden.

18. Das Verfahren nach Anspruch 17 mit den weiteren Schritten des Waschens der Objekte mit konzentrierten wäßrigen Lösungen der Salze mit einer Konzentration von wenigstens 25%, dadurch Herauslösen von Verunreinigungen, die andernfalls eine Gasbildung und ein Schäumen beim nachfolgenden Kontakt mit Säuren bewirken könnten, und Regenerieren der Cellulose mit angesäuerten Lösungen von hydrophilen Lösungsmitteln aus der genannten Gruppe, und umfassend Säuren der Gruppe bestehend aus organischen Carbon-, organischen Sulfon- und anorganischen Säuren.

19. Das Verfahren nach Anspruch 18, wobei die Carbonsäuren zu der Gruppe gehören, die aus Essig-, Propion-, Ameisen-, Oxal- und Milchsäure besteht, und die Sulfonsäuren zu der Gruppe gehören, die aus Methansulfonsäure, Benzol-, Toluol- und Xylolsulfonsäure besteht, und die anorganischen Säuren zu der Gruppe gehören, die aus Salz-, Bromwasserstoff- und Salpetersäure besteht.

20. Das Verfahren nach Anspruch 19, worin die Säure Salzsäure ist.

21. Das Verfahren nach Anspruch 19, wobei die Säure Essigsäure ist.

22. Ein Verfahren zur Bildung eines dünnen Körpers aus rekonstituierter Cellulose, welches die folgenden Schritte umfaßt: Bilden einer Masse von Viskose in der Form des Körpers, In-Kontakt-Bringen der Masse mit einer dehydratisierenden Salzlösung, wie sie in den Ansprüchen 11 bis 16 definiert ist, Waschen des dünnen Körpers gemäß Anspruch 17 und Rekonstituieren der Cellulose gemäß den Ansprüchen 18 bis 21.

23. Das Verfahren nach Anspruch 22, worin der Körper ein Kunstseidenfaden ist.

24. Das Verfahren nach Anspruch 22, worin der Körper eine Cellophanfolie ist.

25. Das Verfahren nach Anspruch 22, worin die Lösung einen niederen Alkohol umfaßt.

26. Das Verfahren nach Anspruch 22, worin die Lösung Magnesiumchlorid umfaßt.

27. Ein Flüssigchromatographie-Trägermaterial wie durch Anspruch 2 definiert, wobei die Teilchen in wäßrigen oder organischen chromatographischen Lösungen im wesentlichen nicht quellen.

28. Ein Flüssigchromatographie-Trägermaterial wie durch Anspruch 3 definiert, wobei die Liganden durch lange, lineare und hydrophile Verknüpfungen befestigt sind.

29. Ein Trägermaterial wie durch Anspruch 28 definiert, wobei die Verknüpfungen alpha-, omega-bifunktionelle Polyethylenglycolmoleküle mit einem Molekulargewicht zwischen 100 und 6.000 Dalton sind.

## Revendications

1. Un support chromatographique comprenant des particules cellulosiques sphéroïdales de haute densité, dures et rigides ayant un diamètre moyen de moins de 25 micromètres et une couche externe dense, non-poreuse, sans des creux, fissures ou vides qui soient discernables à la surface de celle-ci à un grossissement de 6.000 par microscopie électronique, étant essentiellement non-cristallines selon la diffractométrie par rayons X, et dans lequel lesdites particules n'augmentent pas essentiellement de volume dans des solutions aqueuses ou organiques.

2. Un support de chromatographie liquide comprenant : des particules cellulosiques sphéroïdales
i) d'un diamètre moyen de moins de 25 microns,
ii) d'une structure essentiellement non-cristalline déterminée par diffractométrie par rayons X,
iii) ayant une couche extérieure dense, non-poreuse avec un degré d'ordre dans leur composition moléculaire démontré lors d'activité optique sous éclairement par lumière polarisée, et
iv) substantiellement imperméables au nitrogène, déterminé par le test BET d'adsorption de surface pour la porosité, et résistantes à la pression hydrostatique appliquée par la méthode au mercure à plus de 10.000 p.s.i..

3. Les particules cellulosiques conformément à la revendication 2 où toutes les interactions ligands-substrat ont lieu substantiellement à l'extérieur de ladite surface.

4. Les particules cellulosiques conformément à la revendication 1 ayant une peau superficielle de cellulose avec un degré d'ordre, formée sur un noyau sphéroïdal de cellulose se conformant naturellement.

5. Les particules cellulosiques conformément à la revendication 4 comprenant en outre des ligands chromatographiques reliés de manière covalente à ladite surface.

6. Les particules cellulosiques conformément à la revendication 5 où substantiellement toutes les interactions ligands-substrat ont lieu à l'extérieur de ladite surface.

7. Un procédé pour faire des petites particules cellulosiques sphéroïdales denses, ayant une couche extérieure dense, non-poreuse, étant essentiellement non-cristallines selon la diffractométrie par rayons X et comprenant les étapes suivantes : à des températures de moins de 30 degrés C, on forme une émulsion de viscose en présence d'au moins un agent émulsifiant et d'un porteur liquide, où ce dernier est un solvant organique qui n'est pas miscible avec de l'eau pour produire des petites sphères de viscose, on ajoute à ladite émulsion une quantité suffisante d'ester d'acide carbonique afin de provoquer un tampon de viscose hautement alcalin et par conséquent une accélération du processus de formation d'une peau dure et non-collante à la surface des microbilles.

8. Un procédé de la revendication 7 où un agent émulsifiant du groupe constitué de tensides anioniques, cationiques et non-inioniques est utilisé en tant qu'émulsifiant primaire et associé en outre avec des polymères linéaires et/ou globulaires anioniques, cationiques et non-inioniques utilisés en tant que colloïdes protecteurs pour ladite émulsion.

9. Un procédé de la revendication 7 où l'ester d'acide carbonique est sélectionné du groupe constitué de : carbonate de diméthyle, carbonate de diéthyle, carbonate d'éthylène et carbonate de propylène.

10. Le procédé de la revendication 7 où l'ester en question est un carbonate de propylène.

11. Un procédé pour obtentir de petites particules cellulosiques sphériques, denses, ayant une couche externe dense, non-poreuse, et étant essentiellement non-cristallines selon la diffractométrie par rayons X, comprenant les étapes suivantes : a une température de moins de 30 degrés C, on forme une émulsion de viscose en présence d'au moins un agent émulsifiant et d'un porteur liquide, où ce dernier est un solvant organique qui n'est pas miscible avec de l'eau pour produire des petites sphères de viscose, on met en contact ladite émulsion avec un surplus de solution déshydratante d'un sel dans un solvant organique hydrophile miscible avec ledit solvant porteur, causant de ce fait de manière substantielle la formation instantanée d'une peau dure, non-collante à la surface des microbilles.

12. Un procédé de la revendication 11 dans lequel ledit agent émulsifiant en question est sélectionné du groupe de composés constitué de de tensides anioniques, cationiques et non-ioniques en tant qu'émulsifiants primaires, et associé en outre avec un colloïde protecteur pour ledit agent du groupe constitué de polymères linéaires anioniques, cationiques et non-ioniques, ainsi que de polymères globulaires anioniques, cationiques et non-ioniques.

13. Un procédé tel que défini dans la revendication 11 où ladite solution déshydratante de sel consiste en des solvants hydrophiles du groupe constitué d'alcools, de glycols, d'esters et d'éthers d'alcools et de glycols.

14. Le procédé de la revendication 13 où ladite solution comprend un alcool inférieur.

15. Un procédé de la revendication 11 où ladite solution déshydratante de sel consiste en des solutions concentrées du groupe des sels constitué des chlorides de Mg et Ca, des bromides de Li, Mg et Ca, des iodides de Li, Mg et Ca, des nitrates de Li et Ca, des thiocyanates de Li, Na, K et Ca, des formates de Na et K, des acétates de Li, K et Mg, des propionates de Na et K, du lactate de Na et des salicylates de Li, Na et Ca.

16. Le procédé de la revendication 11 où ledit sel est l'acétate de potassium.

17. Un procédé pour obtenir des objets en matière de cellulose reconstituée qui sont denses, microporeux, n'augmentant pas de volume, essentiellement non-cristallins selon la diffractométrie par rayons X, ayant une couche externe dense, non-poreuse et qui ne contiennent ni creux ou autres vides qui soient discernables au microscope électronique jusqu'à un grossissement de 6.000×; le procédé en question comprenant les étapes suivantes :
on fait une masse de viscose sous la forme desdits objets, on lave et on lixivie la masse formée pour éliminer les impuretés, on met ladite masse en contact avec des solutions de sel concentrées à 25% au moins faisant partie du groupe constitué des chlorides de Mg et Ca, des bromides de Li, Mg et Ca, des iodides de Li, Mg et Ca, des nitrates de Li et Ca, des thiocyanates de Li, Na, K et Ca, des formates de Na et K, des acétates de Li, K et Mg, des propionates de Na et K, du lactate de Na et des salicylates de Li, Na et Ca, dans n'importe quels solvants hydrophiles du groupe constitué des alcools, des glycols, des esters et des éthers d'alcools et de glycols, afin de former les objets en question.

18. Le procédé de la revendication 17, comprenant en outre les étapes de laver lesdits objets avec des solutions aqueuses concentrées desdits sels ayant une concentration d'au moins 25%, lixiviant de cette manière les impuretés qui pourraient sinon provoquer le dégagement de gaz et de l'écumage au contact ultérieur aux acides, puis de régénérer la cellulose avec des solutions acidifiées de solvants hydrophiles dudit groupe et comprenant des acides du groupe constitué d'acides carboxyliques organiques, sulfoniques organiques, et inorganiques.

19. Le procédé de la revendication 18 où lesdits acides carboxyliques font partie du groupe constitué d'acide acétique, proprionique, formique, oxalique et lactique, et lesdits acides sulfoniques appartiennent au groupe constitué de l'acide sulfonique de méthane et des acides sulfoniques de xylène, de benzène et de toluène, et où lesdits acides inorganiques font partie du groupe constitué d'acide hydrochlorique, hydrobromique et nitrique.

20. Le procédé de la revendication 19 où l'acide en question est l'acide hydrochlorique.

21. Le procédé de la revendication 19 où l'acide en question est l'acide acétique.

22. Un procédé pour former un corps mince de cellulose reconstituée, comprenant les étapes suivantes : on fait une masse de viscose sous la forme dudit corps, on met ladite masse en contact avec une solution déshydratante de sel telle que définie dans les revendications 11 à 16, on lave ce corps mince selon la revendication 17, et on reconstitue la cellulose selon les revendications 18 à 21.

23. Le procédé de la revendication 22 où le corps en question est un filament de rayonne.

24. Le procédé de la revendication 22 où le corps en question est un film de cellophane.

25. Le procédé de la revendication 22 où ladite solution comprend un alcool inférieur.

26. Le procédé de la revendication 22 où ladite solution comprend du chloride de magnésium.

27. Un support de chromatographie liquide tel que défini dans la revendication 2 où lesdites particules n'augmentent pas essentiellement de volume dans des solutions chromatographiques aqueuses ou organiques.

28. Un support de chromatographie liquide tel que défini dans la revendication 3 où lesdits ligands sont attachés par de liaisons longues, linéaires et hydrophiles.

29. Un support tel que défini dans la revendication 28 où lesdites liaisons sont des molécules de polyéthylène glycol bifonctionnelles alpha et oméga ayant un poids moléculaire situé entre 100 et 6.000 Daltons.
